(19) Europäisches Patentamt
European Patent Office
Office européen des brevets

(11) **EP 4 383 807 A1**

(12) **EUROPEAN PATENT APPLICATION**
published in accordance with Art. 153(4) EPC

(43) Date of publication:
**12.06.2024 Bulletin 2024/24**

(21) Application number: **22867554.2**

(22) Date of filing: **25.07.2022**

(51) International Patent Classification (IPC):
**H04W 28/18** (2009.01)   **H04W 28/02** (2009.01)
**H04W 88/02** (2009.01)

(52) Cooperative Patent Classification (CPC):
**H04W 28/02; H04W 28/18; H04W 88/02;**
Y02D 30/70

(86) International application number:
**PCT/KR2022/010890**

(87) International publication number:
**WO 2023/038285 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2021 KR 20210119328**

(71) Applicant: **Samsung Electronics Co., Ltd.**
**Suwon-si, Gyeonggi-do 16677 (KR)**

(72) Inventor: **CHOI, Junsu**
**Suwon-si, Gyeonggi-do 16677 (KR)**

(74) Representative: **Appleyard Lees IP LLP**
**15 Clare Road**
**Halifax HX1 2HY (GB)**

(54) **ELECTRONIC DEVICE AND TRAFFIC CONTROL METHOD**

(57)    An electronic device, according to one embodiment, comprises: at least one temperature sensor located in the electronic device; at least one wireless communication module configured to transmit and receive a wireless signal; at least one processor operatively connected to the wireless communication module; and a memory electrically connected to the processor and storing instructions executable by the processor, wherein the processor, when the instructions are executed by the processor, may determine a target wake time (TWT) parameter differently according to a heating state of the electronic device based on a temperature of the electronic device, and use the TWT parameter to perform TWT negotiation with an external electronic device through the wireless communication module. Other embodiments may also be possible.

EP 4 383 807 A1

```
        ┌──────────┐
        │  Start   │
        └──────────┘
             │
             ▼
┌────────────────────────────────────────────────────┐ ⌐1010
│ Determine TWT parameters differently depending on    │
│ heat state of STA                                    │
└────────────────────────────────────────────────────┘
             │
             ▼
┌────────────────────────────────────────────────────┐ ⌐1020
│ Perform TWT negotiation by using TWT parameters       │
└────────────────────────────────────────────────────┘
             │
             ▼
        ┌──────────┐
        │   End    │
        └──────────┘
```

FIG. 10A

**Description**

Technical Field

The disclosure relates to an electronic device and a traffic control method.

Background Art

Electronic devices, such as smartphones, tablets, PCs, or laptops, have continued to provide users with various services and user experiences. Electronic devices have been playing a pivotal role in various activities, such as shopping, education, medical service, work, or leisure, and, today, they are so deeply entangled in our lives that they are considered necessities.

In implementations, such as calls, games, or video streaming, in which an electronic device is used while being turned on for a long time, a temperature of the electronic device increases as the electronic device heats up, and thus, a user may be exposed to heat for a long time.

Disclosure of the Invention

Technical Goals

An electronic device may be equipped with a mechanism for preventing additional overheating of the electronic device and lowering a temperature in an overheat state. An application processor may lower a temperature by reducing an operation clock speed and thereby reducing an overall task processing speed and a traffic amount.

A processor (e.g., a Wi-Fi chipset) processing network traffic, instead of reducing a task processing amount by simply reducing a clock speed, may dissipate an overheat state by intentionally dropping acknowledgement (ACK) without transmitting the ACK for traffic transmitted by a counterpart (e.g., a counterpart electronic device that the electronic device is communicating with) to reduce a traffic amount transmitted by the counterpart according to a flow control mechanism, which results in a reduction of a network traffic throughput. The processor processing network traffic may need to process all incoming data despite not intending to transmit the ACK. Thus, it may be inefficient in lowering a temperature of the processor processing network traffic. Retransmission for dropped traffic may be performed on packets not receiving ACK. First, time and frequency resources required for transmitting normally transmitted packets may be wasted, and, additionally, network resources may be wasted when the packets are retransmitted. When the traffic amount itself transmitted by the counterpart decreases over time according to the flow control mechanism, an overhead may only decrease to a certain extent. The flow control mechanism may once reduce a buffer size for a while to respond to a network environment change but may soon increase a buffer gradually until a timeout occurs again. Thus, network resources may be wasted. In addition, the method described above may not be applied to a transport layer protocol, such as a user datagram protocol (UDP), not having a separate flow control mechanism. Accordingly, a technology for performing a traffic control (e.g., traffic throttling) efficiently on network traffic in a device overheat state may be required.

An embodiment may provide a technology for adjusting a duty cycle of transmission and reception with a counterpart differently depending on a heat state of a device by using a target wake time (TWT).

The technical goals to be achieved are not limited to those described above, and other technical goals not mentioned above are clearly understood by one of ordinary skill in the art from the following description.

Technical Solutions

According to an embodiment, an electronic device includes at least one temperature sensor positioned in the electronic device, at least one wireless communication module configured to transmit and receive a wireless signal, at least one processor connected operatively to the wireless communication module, and a memory connected electrically to the processor and configured to store instructions executable by the processor, in which, when the instructions are executed by the processor, the processor is configured to determine a target wake time (TWT) parameter differently depending on a heat state of the electronic device based on a temperature of the electronic device, and perform a TWT negotiation with an external electronic device through the wireless communication module by using the TWT parameter.

According to an embodiment, an operating method of an electronic device includes monitoring a temperature of the electronic device, determining a heat state of the electronic device based on the monitored temperature, determining a target wake time (TWT) parameter differently depending on a heat state of the electronic device, and performing a TWT negotiation with an external electronic device by using the TWT parameter.

Effects

An embodiment may perform a traffic control efficiently without wasting time and frequency resources by differently adjusting a duty cycle of transmission and reception with a counterpart by using a TWT depending on a heat state of a device when performing a traffic control on network traffic in a device overheat state.
An embodiment may reduce a traffic throughput for a transport layer protocol not having a flow control mechanism.
An embodiment may rapidly lower a temperature of a processor (e.g., a wireless communication module) processing network traffic by adjusting a reception and transmission duty cycle itself.
In addition, various effects directly or indirectly ascertained through the present disclosure may be provided.

Brief Description of Drawings

FIG. 1 illustrates an example of a wireless local area network (WLAN) system according to an embodiment.
FIG. 2 illustrates another example of the WLAN system according to an embodiment.
FIG. 3 is a diagram illustrating a protocol for traffic transmission according to an embodiment.
FIG. 4 is a diagram illustrating a TWT element used in the protocol for traffic transmission according to an embodiment.
FIG. 5 is a schematic block diagram illustrating an STA according to an embodiment.
FIG. 6 is another schematic block diagram illustrating the STA according to an embodiment.
FIG. 7 is yet another schematic block diagram illustrating the STA according to an embodiment.
FIG. 8A is a diagram illustrating an example of an operation of determining a TWT parameter according to an embodiment.
FIG. 8B is a diagram illustrating another example of the operation of determining a TWT parameter according to an embodiment.
FIG. 9 is a diagram illustrating a TWT negotiation according to an embodiment.
FIG. 10A is a flowchart illustrating an operating method of the STA according to an embodiment.
FIG. 10B is another flowchart illustrating the operating method of the STA according to an embodiment.
FIG. 11 is a flowchart illustrating a TWT-based traffic control according to an embodiment.
FIG. 12 is another flowchart illustrating the TWT-based traffic control according to an embodiment.
FIG. 13 is a block diagram illustrating an electronic device in a network environment according to an embodiment.

Best Mode for Carrying Out the Invention

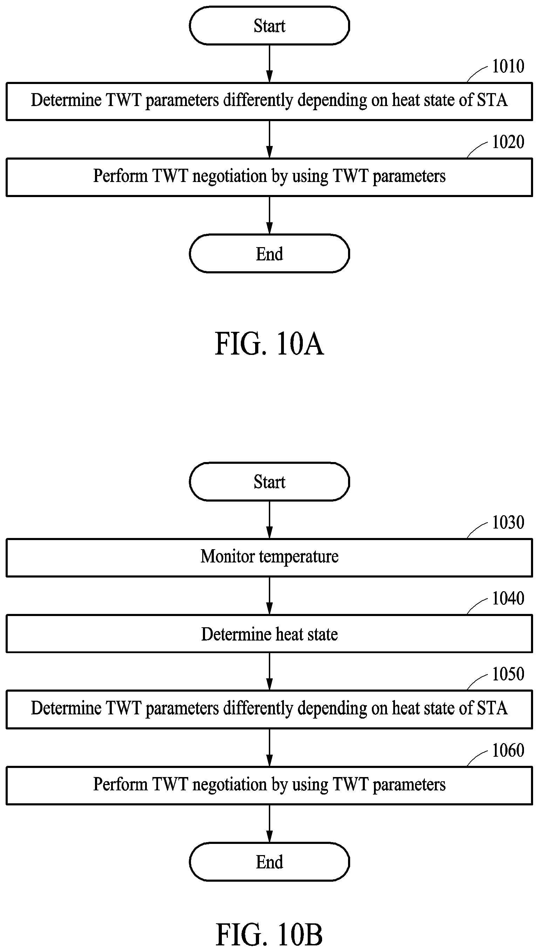

Hereinafter, embodiments are described in detail with reference to the accompanying drawings. When describing the embodiments with reference to the accompanying drawings, like reference numerals refer to like elements and a repeated description related thereto will be omitted.

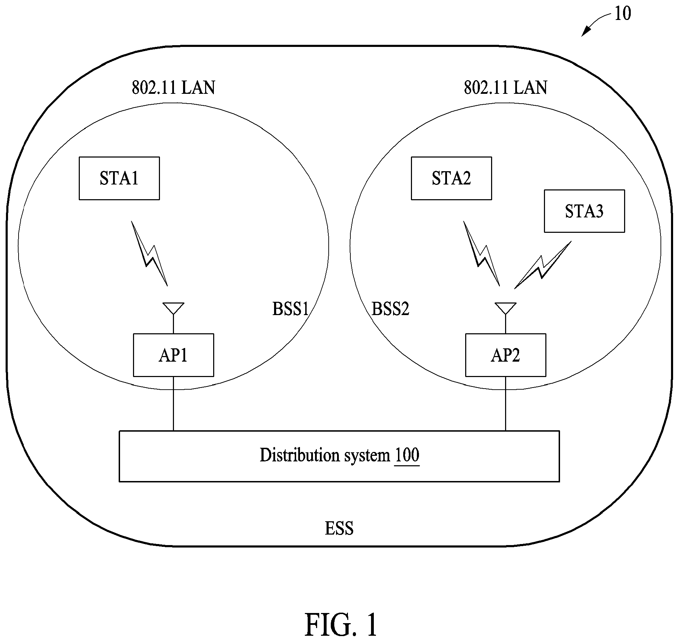

FIG. 1 illustrates an example of a wireless local area network (WLAN) system according to an embodiment.
Referring to FIG. 1, according to an embodiment, a WLAN system 10 may be an infrastructure mode in which an AP is in a WLAN structure of an institute of electrical and electronic engineers (IEEE) 802.11. The WLAN system 10 may include at least one basic service set (BSS) (e.g., BSS1 or BSS2). The BSS (e.g., BSS1 or BSS2) may be a set of an AP and a station (STA) (e.g., an electronic device 1001, 1002, or 1004 of FIG. 10) that may be successfully synchronized with each other to communicate with each other. BSS1 may include AP1 and STA1, and BSS2 may include two or more STAs (e.g., STA2 and STA3) that may be combined with one AP (e.g., AP2).
According to an embodiment, the WLAN system 10 may include at least one STA (e.g., STA1 to STA3), an AP (e.g., AP1 or AP2) that provides a distribution service, and a distribution system 100 that connects a plurality of APs (e.g., AP1 and AP2). The distribution system 100 may implement an extended service set (ESS) by connecting a plurality of BSSs (e.g., BSS 1 and BSS 2). The ESS may be used as a term to refer to one network including at least one AP (e.g., AP1 or AP2) connected via the distribution system 100. APs (e.g., AP1 and AP2) included in one ESS may have the same service set identification (SSID).
According to an embodiment, the STAs (e.g., STA1 to STA3) may be an arbitrary functional medium including a wireless-medium physical layer interface and a medium access control (MAC) conforming to the IEEE 802.11 standard. The term "STA" (e.g., STA1 to STA3) may be used to include both an AP STA and a non-AP STA. The STA (e.g., STA1 to STA3) may also be referred to as various terms, such as an "electronic device", a "mobile terminal", a "wireless device", a "wireless transmit/receive unit (WTRU)", a "user equipment (UE)", a "mobile station (MS)", and a "mobile subscriber unit", or, simply, a "user".

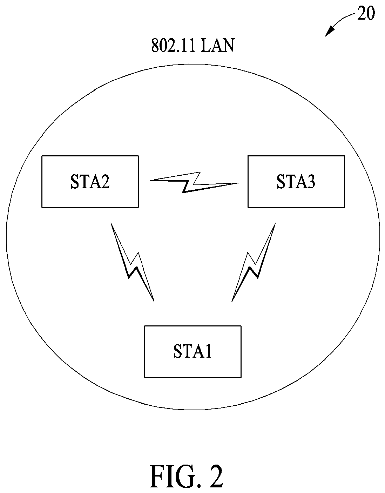

FIG. 2 illustrates another example of the WLAN system according to an embodiment.

Referring to FIG. 2, according to an embodiment, a WLAN system 20 may be an ad-hoc mode in which communication is performed by setting a network between STAs without an AP in a WLAN structure of the IEEE 802. 11, unlike the WLAN system 10 of FIG. 1. The WLAN system 20 may include a BSS operating in an ad-hoc mode, that is, an independent BSS (IBSS).

According to an embodiment, since the IBSS does not include an AP, there may not be a centralized management entity that performs a management function at a center. In the IBSS, STAs may be managed in a distributed manner. In the IBSS, all STAs may be mobile STAs, and access to a distribution system may not be allowed, thus, the IBSS may form a self-contained network.

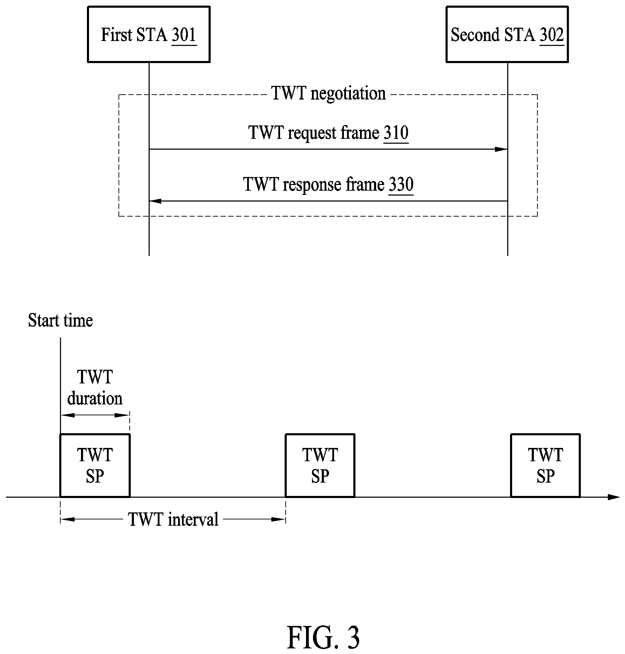

FIG. 3 is a diagram illustrating a protocol for traffic transmission according to an embodiment.

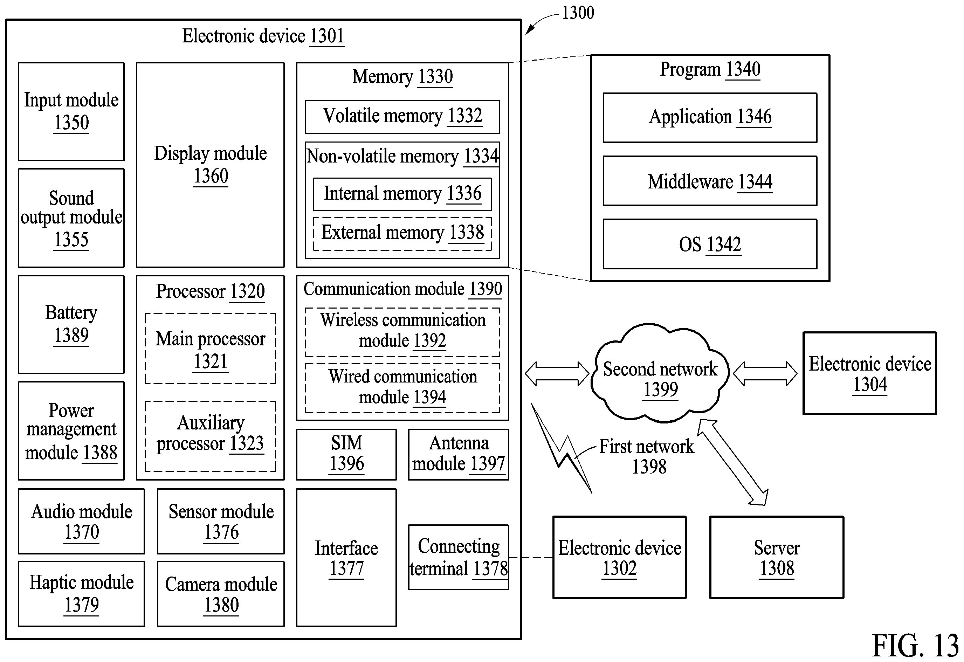

Referring to FIG. 3, according to an embodiment, in a wireless communication system (e.g., the WLAN system 10 of FIG. 1 or the WLAN system 20 of FIG. 2), a first STA 301 (e.g., an electronic device 1301 of FIG. 13) and/or a second STA 302 (e.g., an AP or an electronic device 1302 or 1304 of FIG. 13) may perform wireless communication according to a target wake time (TWT) protocol in a BSS. A TWT may be a time resource set to manage an activity of an STA (e.g., the first STA 301 or the second STA 302) in the BSS and may be defined to minimize an operation of a wake state (or an awake state) (e.g., a wake mode) of the STA (e.g., the first STA 301 or the second STA 302). A TWT setting may be used for the STA (e.g., the first STA 301 or the second STA 302) to perform data transmission and reception during a certain TWT duration at a certain TWT interval, and a plurality of STAs (the first STA 301 and the second STA 302) may operate at a set time according to the TWT setting. Contention between the STAs (the first STA 301 and the second STA 302) may decrease.

According to an embodiment, the first STA 301 may perform wireless communication with the second STA 302, which is an external electronic device, according to the TWT protocol. The first STA 301 and the second STA 302 may perform a TWT negotiation to transmit and receive data to and from each other according to the TWT protocol. The TWT negotiation may be performed between the first STA 301 and the second STA 302, in which the first STA 301 may transmit, to the second STA 302, a TWT request frame 310 for requesting the TWT setting, and, in response to the TWT request frame 310, the second STA 302 may transmit, to the first STA 301, a TWT response frame 330 for responding to the TWT setting. The first STA 301 requesting the TWT may be referred to as a TWT request STA, and the second STA 302 that performs communication with the TWT request STA, based on the request for the TWT, may be referred to as a TWT response STA. For example, the TWT request STA may be a first user STA, and the TWT response STA may be an AP or a second user STA.

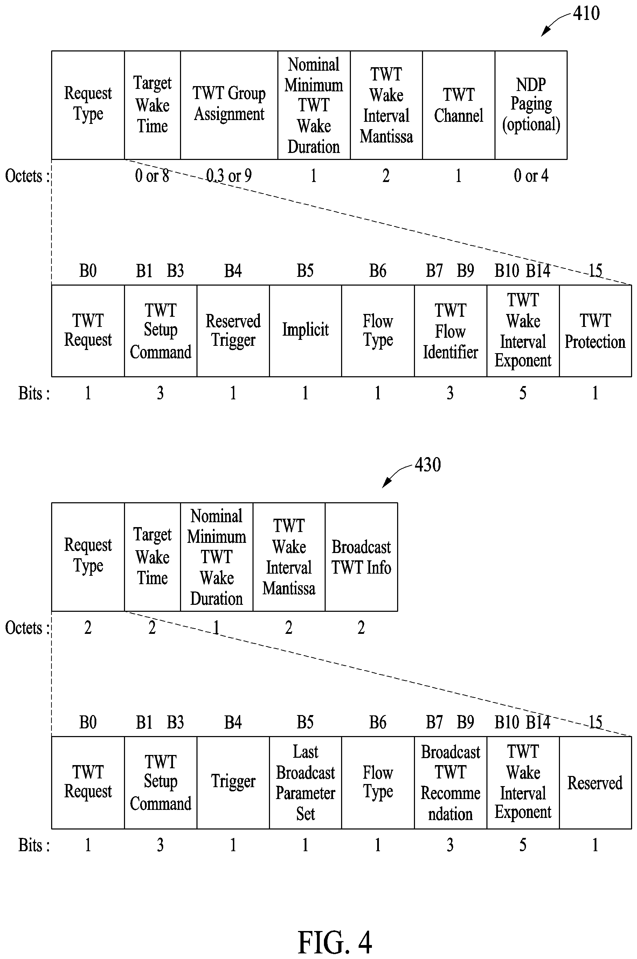

According to an embodiment, the TWT request frame 310 and/or the TWT response frame 330 may include a TWT element (e.g., a TWT element 410 or 430 of FIG. 4) for setting a TWT parameter (or TWT parameter information). A TWT element included in the TWT request frame 310 may be referred to as a TWT request element, and a TWT element included in the TWT response frame 330 may be referred to as a TWT response element. The TWT request element and the TWT response element may be the same format or different formats in which some of the included fields are different.

According to an embodiment, the first STA 301 and the second STA 302 may perform wireless communication according to the TWT setting, for example, the TWT parameter, based on the TWT negotiation. The TWT parameter may be an operational parameter (e.g., a periodic parameter and/or an aperiodic parameter) for communication between the first STA 301 and the second STA 302, based on the TWT protocol. For example, the TWT parameter may include start time information of a TWT service period (SP), duration information of the TWT SP, and/or TWT interval information of the TWT SP.

According to an embodiment, the first STA 301 may switch periodically between a wake state (or an awake state) (e.g., a wake mode) and a doze state (e.g., a doze mode), based on the TWT parameter. For example, a wireless communication module of the first STA 301 for performing communication with the second STA 302 may switch periodically between the wake state and the doze state, based on the TWT parameter.

According to an embodiment, the first STA 301 may transmit and receive data by switching from the doze state to the wake state during the TWT SP and may switch from the wake state to the doze state during a period other than the TWT SP. For example, the doze state may be a state in which data transmission and reception may not be performed by the STA (e.g., the first STA 301) for power saving. The wake state may be a state in which data transmission and reception may be performed by the STA (e.g., the first STA 301).

FIG. 4 is a diagram illustrating a TWT element used in the protocol for traffic transmission according to an embodiment.

Referring to FIG. 4, according to an embodiment, a TWT request frame (e.g., the TWT request frame 310 of FIG. 3) and/or a TWT response frame (e.g., the TWT response frame 330 of FIG. 3) may include a TWT element 410 or 430 to set a TWT parameter (or TWT parameter information). The TWT element 410 may be an individual TWT parameter set field format according to IEEE 802.11 (e.g., IEEE 802.11ax), and the TWT element 430 may be a broadcast TWT parameter set field format according to IEEE 802.11 (e.g., IEEE 802.11ax). A TWT element included in the TWT request frame 310 and/or the TWT response frame 330 may be the TWT element 410 or 430.

According to an embodiment, the TIΛΓΓ element 410 may include a request type field, a target wake time field, a TWT group assignment field, a nominal minimum TIΛΓΓ wake duration field, a TIΛΓΓ wake interval mantissa field, a TWT channel field (an N field), and an NDP paging field. In this case, the request type field may include a plurality of sub-fields, for example, a TWT request field, a TWT setup command field, a trigger field, an implicit field, a flow type field, a TWT flow identifier field, a TIΛΓΓ wake interval exponent field, and a TWT protection field.

According to an embodiment, the TIΛΓΓ element 430 may include a request type field, a target wake time field, a nominal minimum TIΛΓΓ wake duration field, a TIΛΓΓ wake interval mantissa field, and a broadcast TWT information field. In this case, the request type field may include a plurality of sub-fields, for example, a TWT request field, a TWT setup command field, a trigger field, a last broadcast parameter set field, a flow type field, a broadcast TWT recommendation field, a TIΛΓΓ wake interval exponent field, and a reserved field.

According to an embodiment, the TWT parameter (e.g., start time information of a TWT SP, duration information of the TWT SP, and/or TWT interval information of the TWT SP) may be determined by setting a value of at least one field of the plurality of fields included in the TIΛΓΓ element 410 or 430. A time from which the TIΛΓΓ SP starts may be set in the target wake time field of the TIΛΓΓ element 410 or 430, and a TWT duration for which the TWT SP continues (or is maintained) may be set in the nominal minimum TIΛΓΓ wake duration field of the TIΛΓΓ element 410 or 430. A TWT interval (e.g., a value of an interval) of the TWT SP may be determined by a value set in the TIΛΓΓ wake interval mantissa field of the TIΛΓΓ element 410 or 430 and the TWT wake interval exponent field of the TIΛΓΓ element 410 or 430. Information on a mantissa to determine the TWT interval in the TIΛΓΓ wake interval mantissa field may be set, and information on an exponent value of which a base is 2 to determine the TWT interval in the TIΛΓΓ wake interval exponent field may be set. The size of the TWT interval may be determined based on TIΛΓΓ wake interval mantissa $\times$ 2(TWTwake interval exponent).

According to an embodiment, a TWT negotiation between the first STA 301 and the second STA 302 for setting a TWT may be performed, in which the first STA 301 may transmit, to the second STA 302, the TWT request frame 310 including the TIΛΓΓ element 410 or 430, and, in response to the TWT request frame 310, the second STA 302 may transmit, to the first STA 301, the TWT response frame 330 including the TIΛΓΓ element 410 or 430. The TIΛΓΓ response frame 330 may include information indicating an accept TWT or a reject TWT. The accept TWT may indicate accepting a value of a TWT parameter requested by the first STA 301, that is, a TWT request STA, and the reject TWT may indicate not accepting the value of the TWT parameter requested by the first STA 301, that is, the TIΛΓΓ request STA.

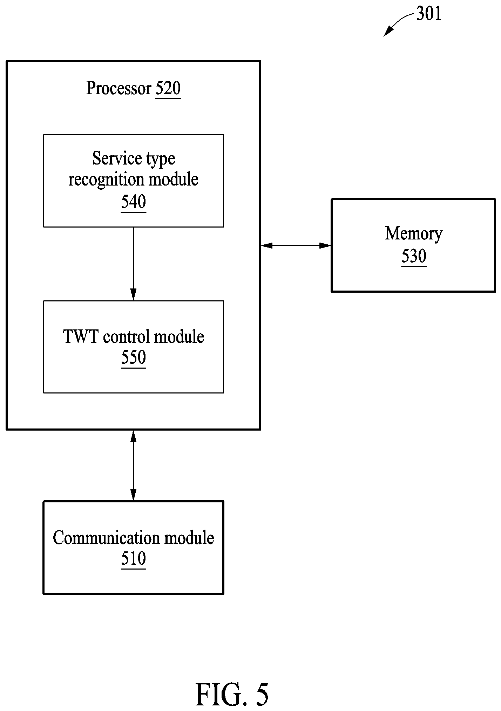

FIG. 5 is a schematic block diagram illustrating an STA according to an embodiment.

Referring to FIG. 5, according to an embodiment, the first STA 301 may perform a TWT negotiation, to set a TWT (e.g., set an initial TWT or renew a TWT setting), with the second STA 302, that is, an external electronic device to and from which data on a running service is transmitted and received. The TIΛΓΓ setting may be used for the first STA 301 or the second STA 302 to perform data transmission and reception during a certain TWT duration at a certain TWT interval or may be used for a traffic control (e.g., traffic throttling) over a wireless communication module 510 included in the first STA 301.

According to an embodiment, the first STA 301 may include at least one wireless communication module 510 (e.g., a wireless communication module 1392 of FIG. 13) configured to transmit and receive a wireless signal, at least one processor 520 (e.g., a processor 1320 of FIG. 13) connected operatively to the wireless communication module 510, and a memory 530 (e.g., a memory 1330 of FIG. 13) connected electrically to the processor 520. The wireless communication module 510 may be a Wi-Fi chipset. A service type recognition module 540 included in the first STA 301 and a TWT control module 550 included in the first STA 301 may be executable by the processor 520 and may include one or more of program code, an application, an algorithm, a routine, a set of instructions, and an artificial intelligence learning model, which include instructions that may be stored in the memory 530. In addition, at least one of the service type recognition module 540 and the TIΛΓΓ control module 550 may be implemented through hardware or a combination of hardware and software.

According to an embodiment, the service type recognition module 540 may recognize a service type (e.g., a real-time service or a non-real-time service) of a running service (e.g., a currently running service in the processor 520) in the first STA 301. The service type recognition module 540 may output the recognized service type of the running service to the TWT control module 550.

According to an embodiment, the TIΛΓΓ control module 550 may determine whether to perform a TWT setting on the second STA 302, based on the recognized service type of the running service. For example, the TIΛΓΓ control module 550 may determine to perform the TIΛΓΓ setting on the second STA 302 when the recognized service type is a real-time service and may determine not to perform the TWT setting (e.g., tear down a TIΛΓΓ) on the second STA 302 when the recognized service type is a non-real-time service.

According to an embodiment, the TWT control module 550 may determine TWT parameters (e.g., a TWT interval and a TWT duration) based on the real-time service, which is the service type of the running service. The TIΛΓΓ control module 550 may set at least one value of a TIΛΓΓ wake interval mantissa field, a nominal minimum TWT duration field, and a TWT wake interval exponent field in a TWT element (e.g., the TIΛΓΓ element 410 or 430 of FIG. 4) according to the determined TWT parameters. Accordingly, the TIΛΓΓ control module 550 may adjust a TWT duty cycle that is defined based on the TWT interval and the TWT duration to match the service type of the running service.

According to an embodiment, the TIΛΓΓ control module 550 may control the wireless communication module 510 such that the wireless communication module 510 may perform a TWT negotiation with the second STA 302 by using the determined TWT parameters. The wireless communication module 510 may transmit, to the second STA 302, a TWT request frame (e.g., the TWT request frame 310 of FIG. 3) including the TIΛΓΓ element 410 or 430 of which a value is set by the TWT control module 550. In response to the TWT request frame 310, the second STA 302 may transmit a TWT response frame (e.g., the TWT response frame 330 of FIG. 3) to the wireless communication module 510.

According to an embodiment, when the TIΛΓΓ response frame 330 includes an accept TWT, the wireless communication module 510 may perform wireless communication with the second STA 302 according to the TWT setting, for example, a TWT parameter, based on the TWT negotiation. The wireless communication module 510 may transmit and receive data by switching from a doze state to a wake state during a TWT SP and may switch from the wake state to the doze state during a period other than the TWT SP. The wireless communication module 510 may perform a traffic control (e.g., traffic throttling) efficiently by using the TIΛΓΓ setting by the TWT negotiation.

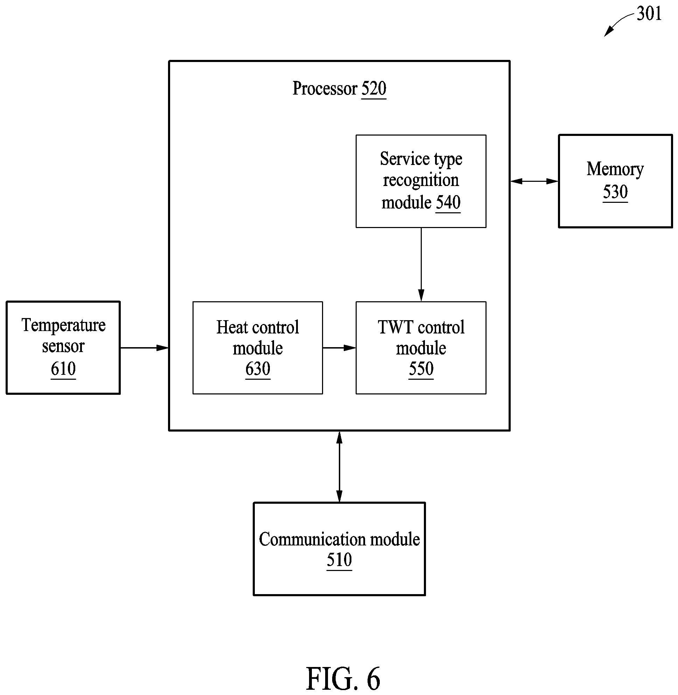

FIG. 6 is another schematic block diagram illustrating the STA according to an embodiment.

Referring to FIG. 6, according to an embodiment, the first STA 301 may perform a TWT negotiation with the second STA 302 to set a TWT (e.g., set an initial TWT or renew a TWT setting) for the second STA 302, that is, an external electronic device, to and from which data on a running service is transmitted and received according to a heat state (e.g., high heat state) of the first STA 301 based on a temperature (e.g., a temperature monitored in the first STA 301) of the first STA 301. The TWT setting may be used for the first STA 301 and the second STA 302 to perform data transmission and reception during a certain TIΛΓΓ duration at a certain TWT interval and may also be used to lower a temperature of the wireless communication module 510 by performing a traffic control (e.g., traffic throttling) on the wireless communication module 510 included in the first STA 301 according to a heat state (e.g., a high heat state) of the first STA 301.

According to an embodiment, the first STA 301 may further include at least one temperature sensor 610 (e.g., a sensor module 1376 of FIG. 13) other than at least one wireless communication module 510, at least one processor 520, and at least one memory 530. The temperature sensor 610 may be in a proximity to various components (e.g., the processor 520, the wireless communication module 510, and/or an antenna (now shown)) in the first STA 301 and may monitor the temperature of the first STA 301. A position, in which the temperature sensor 610 is, may not be limited to the foregoing example, but the temperature sensor 610 may be adjacent to various components related to a heat source (e.g., a main heat source of Wi-Fi communication) for the wireless communication module 510.

According to an embodiment, the first STA 301 may further include a heat control module 630 other than the service type recognition module 540 and the TIΛΓΓ control module 550. The heat control module 630 may be executable by the processor 520 and may include one or more of program code, an application, an algorithm, a routine, a set of instructions, and an artificial intelligence learning model, which include instructions that may be stored in the memory 530. In addition, the heat control module 630 may be implemented through hardware or a combination of hardware and software.

According to an embodiment, the service type recognition module 540 may recognize a service type (e.g., a real-time service or a non-real-time service) of a running service (e.g., a currently running service in the processor 520) in the first STA 301. The service type recognition module 540 may output the recognized service type of the running service to the TWT control module 550.

According to an embodiment, the heat control module 630 may determine a heat state based on the temperature monitored by the temperature sensor 610 in the first STA 301. The heat control module 630 may determine whether the heat state of the first STA 301 is a high heat state, based on the temperature monitored in the first STA 301. The heat control module 630 may notify the TIΛΓΓ control module 550 that the first STA 301 is in a high heat state. In this case, the heat control module 630 may output, to the TWT control module 550, a maximum throughput (e.g., a throughput limit) of the wireless communication module 510 based on the high heat state of the first STA 301. The maximum throughput that is output by the heat control module 630 may be determined according to a degree (a monitored temperature range) of the high heat state and may be used to notify the TWT control module 550 that the first STA 301 is in a high heat state. The maximum throughput may be an upper limit to lower the temperature of the wireless communication module 510.

According to an embodiment, the TIΛΓΓ control module 550 may determine whether to perform the TIΛΓΓ setting on the second STA 302 in response to an output (e.g., the recognized service type of the running service) of the service type recognition module 540 and/or an output (e.g., the maximum throughput) of the heat control module 630. An operation that the TWT control module 550 performs the TIΛΓΓ setting by using the output of the service type recognition module 540 may be substantially the same as the operation of performing the TIΛΓΓ setting described with reference to FIG. 5.

According to an embodiment, the TWT control module 550 may determine TWT parameters differently depending on a heat state (e.g., a high heat state) of the first STA 301. The TWT control module 550 may determine the TWT parameters (e.g., a TWT interval and a TWT duration) differently such that a TWT duty cycle may operate (be adjusted) differently depending on the maximum throughput, which is an output of the heat control module 630. The maximum throughput, which is an output of the heat control module 630, may be an upper limit of the TWT duty cycle. For example, the TWT control module 550 may determine the TWT parameters such that the TWT duty cycle decreases as the temperature (e.g., the monitored temperature) of the first STA 301 increases.

According to an embodiment, the TWT control module 550 may determine the TWT parameters to be a combination of a TWT duration and a different TWT wake interval, which satisfies the same TWT duty cycle, with respect to the TWT duty cycle based on a heat state (e.g., a high heat state) of the first STA 301. In this case, the TWT control module 550 may determine the combination of a TWT duration and a different TWT wake interval, which satisfies the same TWT duty cycle, according to the service type, recognized by the service type recognition module 540, of the running service. For example, the TWT control module 550 may determine the combination of a TWT duration and a first TWT wake interval, which satisfies the same TWT duty cycle, when the service type is a real-time service, and may determine the combination of a TWT duration and a second TWT wake interval, which satisfies the same TWT duty cycle, when the service type is a non-real-time service. The first TWT wake interval may be less than the second TWT wake interval. The TWT control module 550 may determine the combination of a TWT duration and a TWT wake interval, which satisfies a user experience, by using the recognized service type of the running service with respect to the same TWT duty cycle.

According to an embodiment, the TWT control module 550 may determine a TWT duty cycle based on a heat state (e.g., a high heat state) of the first STA 301 and may determine the TWT parameters to be a combination of a TWT duration and a TWT wake interval, which satisfies the same (or determined) TWT duty cycle, based on the recognized service type of the running service. The TWT control module 550 may set at least one value of a TWT wake interval mantissa field, a nominal minimum TWT duration field, and a TWT wake interval exponent duration field in a TWT element (e.g., the TWT element 410 or 430 of FIG. 4) according to the determined TWT parameters. Accordingly, the TWT control module 550 may adjust the TWT duty cycle defined based on a TWT duration and a TWT interval depending on a heat state (e.g., a high heat state) of the first STA 301. For example, when the heat state of the first STA 301 is the high heat state, the TWT control module 550 may increase the TWT interval and/or decrease the TWT duration.

According to an embodiment, the TWT control module 550 may control the wireless communication module 510 such that the wireless communication module 510 may perform a TWT negotiation with the second STA 302 by using the determined TWT parameters. The wireless communication module 510 may transmit, to the second STA 302, a TWT request frame (e.g., the TWT request frame 310 of FIG. 3) including the TWT element 410 or 430 of which a value is set by the TWT control module 550. In response to the TWT request frame 310, the second STA 302 may transmit a TWT response frame (e.g., the TWT response frame 330 of FIG. 3) to the wireless communication module 510.

According to an embodiment, when the TWT response frame 330 includes an accept TWT, the wireless communication module 510 may perform wireless communication with the second STA 302 according to the TWT setting, for example, a TWT parameter, based on the TWT negotiation. The wireless communication module 510 may transmit and receive data by switching from a doze state to a wake state during a TWT SP and may switch from the wake state to the doze state during a period other than the TWT SP. The wireless communication module 510 may perform a traffic control (e.g., traffic throttling) efficiently by using the TWT setting by the TWT negotiation according to the heat state (e.g., the high heat state) of the first STA 301. Accordingly, the temperature of the wireless communication module 510 may be lowered.

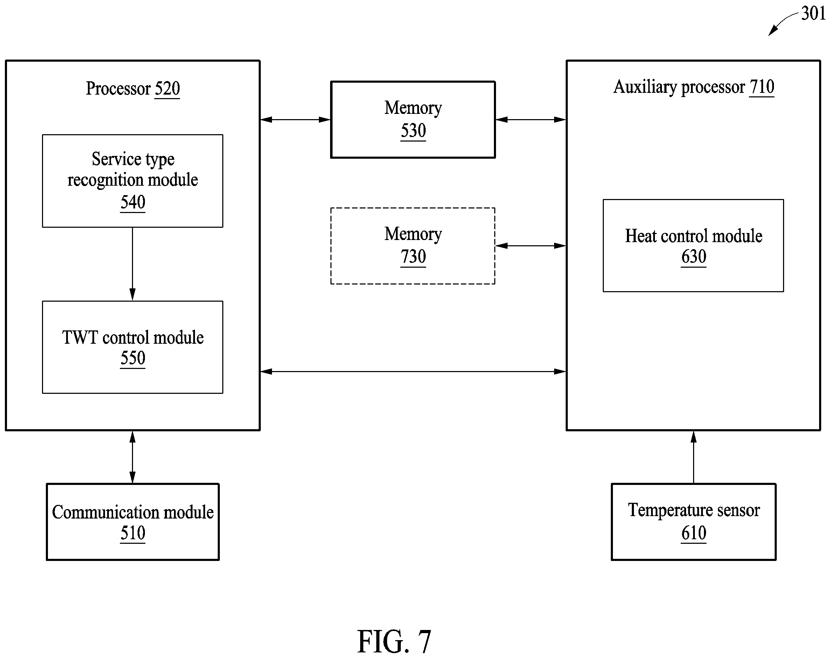

FIG. 7 is yet another schematic block diagram illustrating the STA according to an embodiment.

Referring to FIG. 7, according to an embodiment, the first STA 301 may further include an auxiliary processor 710 (e.g., an auxiliary processor 1223 of FIG. 13 or a sensor hub processor) other than at least one wireless communication module 510, at least one processor 520, at least one memory 530, and at least one temperature sensor 610. In addition, the first STA 301 may further include a memory 730 connected electrically to the auxiliary processor 710. the auxiliary processor 710 may also be connected electrically to the memory 530.

According to an embodiment, the heat control module 630 may be executable by the auxiliary processor 710 and may include one or more of program code, an application, an algorithm, a routine, a set of instructions, and an artificial intelligence learning model, which include instructions that may be stored in the memory 530 or 730. In addition, the heat control module 630 may be implemented through hardware or a combination of hardware and software.

According to an embodiment, the description of each component (e.g., the wireless communication module 510, the processor 520, the memory 530, the service type recognition module 540, the TWT control module 550, the temperature sensor 610, or the heat control module 630) of FIG. 7 may be substantially the same as the operation of each component (e.g., the wireless communication module 510, the processor 520, the memory 530, the service type recognition module 540, the TWT control module 550, the temperature sensor 610, or the heat control module 630) described with reference to FIG. 5 and/or FIG. 6. Accordingly, further description thereof is not repeated herein.

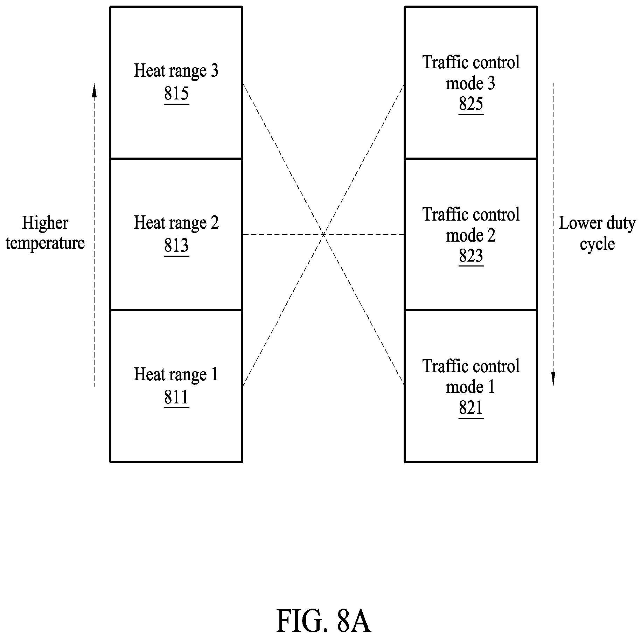

FIG. 8A is a diagram illustrating an example of an operation of determining a TWT parameter according to an embodiment.

Referring to FIG. 8A, according to an embodiment, heat states 811 to 815 (e.g., an overheat state) of the first STA 301 may be classified into a plurality of heat states according to a monitored temperature (e.g., a temperature range) in the first STA 301. A first heat state 811 may have a first temperature range, a second heat state 813 may have a second temperature range, and a third heat state 815 may have a third temperature range. An upper limit of a TWT duty cycle may vary depending on each of the heat states 811 to 815. The heat states 811 to 815 may correspond respectively to traffic control modes (or throttling modes) 821 to 825 to which different upper limits of the TIΛΓΓ duty cycle are assigned. The traffic control modes 821 to 825 may be an operation mode in which an STA (e.g., the first STA 301) performs a TWT negotiation not to exceed an upper limit of the TIΛΓΓ duty cycle assigned to a traffic control mode. Although a heat state and a traffic control mode are each divided into three for ease of description in FIG. 8A, examples are not limited thereto. The heat state and the traffic control mode may each be divided into one or more as a temperature (e.g., a temperature range) monitored in the STA (e.g., the first STA 301) may be divided in various methods.

According to an embodiment, the first STA 301 may perform a TWT negotiation in different TWT duty cycles depending on the heat states 811 to 815 of the first STA 301. For example, the first STA 301 may perform a TWT negotiation in a traffic control mode (e.g., a first traffic control mode 821) in which traffic throttling may be performed tighter as a heat state (e.g., a third heat state 815) corresponds to a higher temperature. In other words, the first STA 301 may perform a TWT negotiation by setting TWT parameters (e.g., a TWT interval and a TWT duration) to have a lower TWT duty cycle. Although traffic control (e.g., traffic throttling) is accompanied by the degradation of a user experience, such as an increase of network latency and a decrease of a speed, an embodiment may resolve a heat state efficiently and may alleviate the degradation of a user experience by varying the traffic control (e.g., traffic throttling) depending on the heat state.

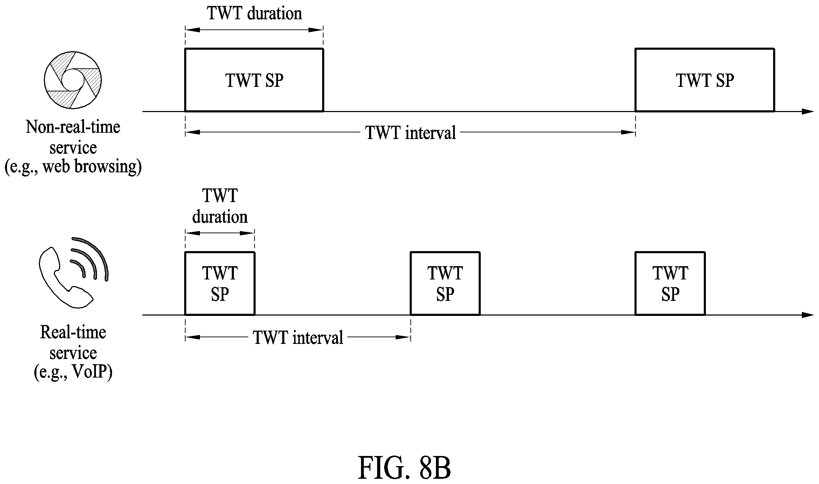

FIG. 8B is a diagram illustrating another example of the operation of determining a TWT parameter according to an embodiment.

Referring to FIG. 8B, according to an embodiment, in a TWT duty cycle based on a heat state (a high heat state) (e.g., the heat states 811, 813, or 815 of FIG. 8A) of the first STA 301, the first STA 301 may determine TWT parameters to be a combination of a TWT duration and a different (or various) TWT wake interval, which satisfies the same TWT duty cycle. For example, a combination satisfying a TWT duty cycle upper limit (e.g., a 30% duty cycle) may include a combination of a TWT interval (e.g., 100 ms) and a TWT duration (e.g., 30 ms) and a combination of a TWT interval (e.g., 50 ms) and a TWT duration (e.g., 15 ms). TIΛΓΓ duty cycles that are substantially the same (or similar) may dissipate a heat state to a similar degree. Accordingly, the first STA 301 may determine the TWT parameters by applying different combinations of TWT intervals and TWT durations, which satisfies the same TWT duty cycle limit, according to a service type of a running service and may thereby minimize user experience degradation while maintaining the same heat dissipation performance.

For example, in a real-time service, such as VoIP, using a combination of a short TWT interval and TWT duration, which satisfies the TWT duty cycle limit, may minimize user experience degradation while maintaining the same heat dissipation performance. In a non-real-time service, such as web browsing, using a combination of a long TWT interval and TWT duration, which satisfies the same TWT duty cycle limit, may have an advantageous effect in handling burst traffic and may minimize user experience degradation while maintaining the same heat dissipation performance.

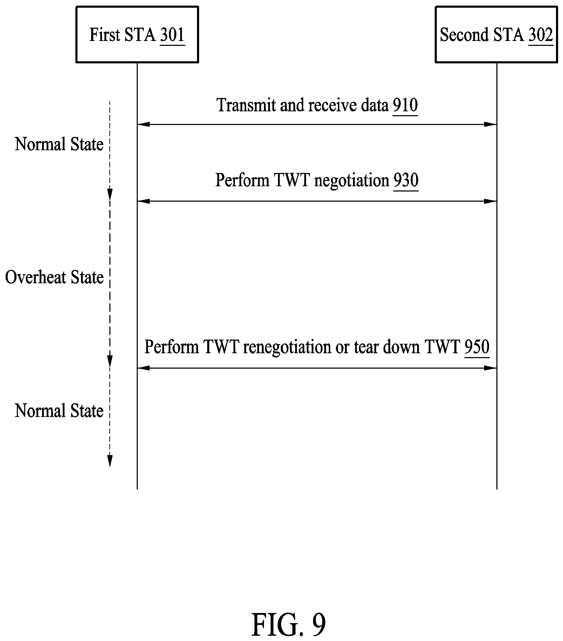

FIG. 9 is a diagram illustrating a TWT negotiation according to an embodiment.

Referring to FIG. 9, in operation 910, the first STA 301 may transmit and receive data on a service running in the first STA 301 to and from the second STA 302, which is an external electronic device. The first STA 301 may monitor a temperature in the first STA 301 and may determine that a heat state of the first STA 301 is an overheat state according to the monitored temperature. The first STA 301 may determine that a state of the first STA 301 switches from a normal state to an overheat state.

In operation 930, the first STA 301 may perform a TWT negotiation with the second STA 302 according to the heat state of the first STA 301. The first STA 301 may determine that a network traffic control (e.g., traffic throttling) is required in an overheat state and may control the wireless communication module 510 to perform the TIΛΓΓ negotiation with a combination of a TWT interval and a TWT duration, which has a TWT duty cycle that may dissipate the overheat state, for the wireless communication module 510 included in the first STA 301. The wireless communication module 510 and the second STA 302 may perform the TWT negotiation by transmitting and receiving a TWT request frame and a TWT response frame. The wireless communication module 510 may transmit and receive data by switching from a doze state to a wake state during a TWT SP according to a TWT setting by the TIΛΓΓ negotiation and may switch from the wake state to the doze state during a period other than the TWT SP.

In operation 950, a certain time has passed after the TWT negotiation, the first STA 301 may determine that the heat state is dissipated according to the monitored temperature and may perform the TIΛΓΓ negotiation again normally with a combination of a TWT interval and a TWT duration, which is suitable for QoS, or may not use the TWT negotiation at all (e.g., tear down a TWT). Accordingly, the first STA 301 may be released from a traffic control state (e.g., a traffic throttling state). According to an embodiment, the first STA 301 may periodically monitor the temperature of the first STA 301.

FIG. 10A is a flowchart illustrating an operating method of the STA according to an embodiment.

Referring to FIG. 10A, operations 1010 and 1020 may be performed in a situation where the first STA 301 may transmit and receive data on a service running in the first STA 301 to and from the second STA 302, which is an external electronic device.

In operation 1010, the first STA 301 may determine TWT parameters differently depending on a heat state (e.g., a high heat state) of the first STA 301, based on a temperature of the first STA 301.

In operation 1020, the first STA 301 may perform a TWT negotiation with the second STA 302, which is an external electronic device, through the wireless communication module 510 by using the TWT parameters.

FIG. 10B is another flowchart illustrating the operating method of the STA according to an embodiment.

Referring to FIG. 10B, operations 1030 to 1060 may be performed in a situation where the first STA 301 may transmit and receive data on a service running in the first STA 301 to and from the second STA 302, which is an external electronic device.

In operation 1030, the first STA 301 may monitor a temperature of the first STA 301.

In operation 1040, the first STA 301 may determine a heat state (e.g., an overheat state) of the first STA 301, based on the temperature monitored in the first STA 301.

In operation 1050, the first STA 301 may determine TWT parameters differently depending on the heat state (e.g., the overheat state) of the first STA 301, based on the temperature of the first STA 301.

In operation 1060, the first STA 301 may perform a TWT negotiation with the second STA 302, which is an external electronic device, through the wireless communication module 510 by using the TWT parameters.

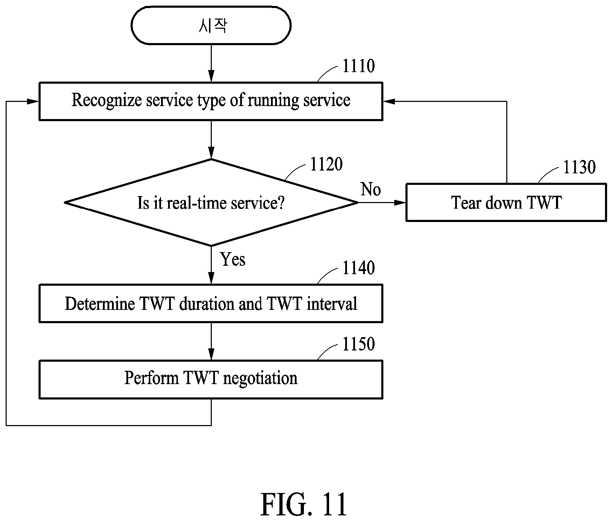

FIG. 11 is a flowchart illustrating a TWT-based traffic control according to an embodiment.

Referring to FIG. 11, operations 1110 to 1050 may be performed in a situation where the first STA 301 may transmit and receive data on a service running in the first STA 301 to and from the second STA 302, which is an external electronic device. Operations 1110 to 1150 may be performed sequentially but may not necessarily be performed sequentially. For example, the order of operations 1110 to 1150 may be changed, and at least two of operations 1110 to 1150 may be performed in parallel.

In operation 1110, the first STA 301 may recognize a service type (e.g., a real-time service or a non-real-time service) of a running service (e.g., a currently running service in the processor 520) in the first STA 301.

In operation 1120, the first STA 301 may determine whether a TWT-based traffic control (e.g., TWT-based traffic throttling) is required according to whether the recognized service type is a real-time service. The first STA 301 may determine that the TWT-based traffic control is required when the recognized service type is a real-time service.

In operation 1130, when the recognized service type is not a real-time service, the first STA 301 may not use a TWT (or a TWT negotiation). The first STA 301 may not perform the TWT negotiation on the second STA 302.

In operation 1140, when the recognized service type is a real-time service, the first STA 301 may determine TWT parameters (e.g., a TWT interval and a TWT duration) based on the real-time service, which is the service type of the running service. The TWT control module 550 may set at least one value of a TWT wake interval mantissa field, a nominal minimum TWT duration field, and a TWT wake interval exponent duration field in a TWT element (e.g., the TWT element 410 or 430 of FIG. 4) according to the determined TWT parameters.

In operation 1150, the first STA 301 may perform the TWT negotiation with the second STA 302 by using the TWT parameters.

According to an embodiment, operations 1110 to 1150 may be performed repeatedly in a designated cycle. The first STA 301, through operations 1110 to 1150, may perform a traffic control (e.g., traffic throttling) efficiently by using a TWT setting by the TWT negotiation.

According to an embodiment, a cycle of performing operations 1110 to 1150 may be determined based on a temperature of the first STA 301. For example, when the temperature of the first STA 301 is in a high temperature state, the cycle of performing operations 1110 to 1150 may be short.

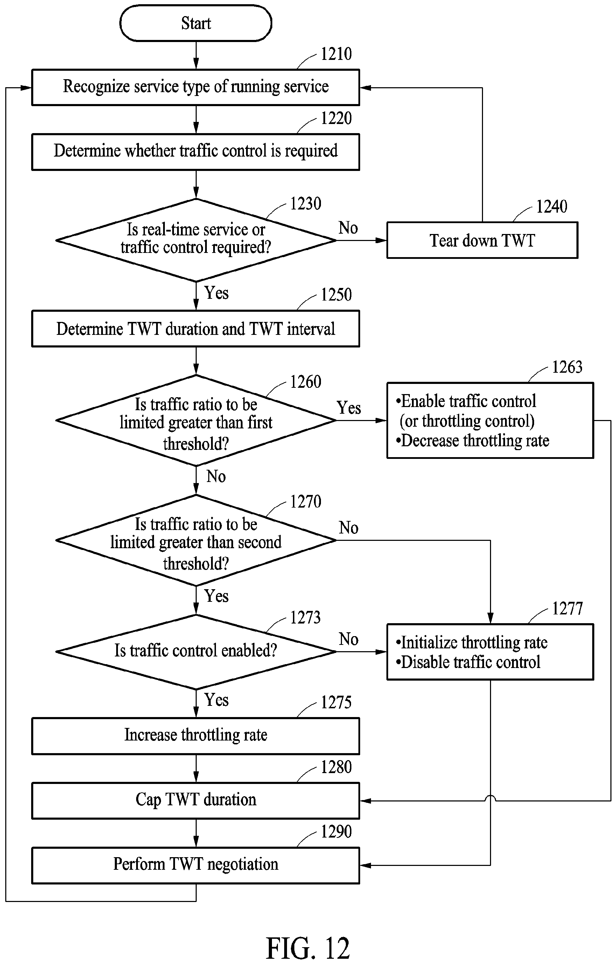

FIG. 12 is another flowchart illustrating the TWT-based traffic control according to an embodiment.

Referring to FIG. 12, operations 1210 to 1280 may be performed in a situation where the first STA 301 may transmit and receive data on a service running in the first STA 301 to and from the second STA 302, which is an external electronic device. Operations 1210 to 1280 may be performed sequentially but may not necessarily be performed sequentially. For example, the order of operations 1210 to 1280 may be changed, and at least two of operations 1210 to 1280 may be performed in parallel.

In operation 1210, the first STA 301 may recognize a service type (e.g., a real-time service or a non-real-time service) of a running service (e.g., a currently running service in the processor 520) in the first STA 301.

In operation 1220, the first STA 301 may monitor a temperature in the first STA 301 and may determine whether a traffic control (e.g., traffic throttling) is required for the wireless communication module 510 included in the first STA 301 according to a heat state of the first STA 301 based on the monitored temperature.

In operation 1230, the first STA 301 may determine whether a TWT-based traffic control (e.g., TWT-based traffic throttling) is required according to whether the recognized service type is a real-time service or whether the traffic control according to the heat state of the first STA 301 is required. The first STA 301 may transmit and receive data based on a TWT when the recognized service type is a real-time service or the traffic control according to the heat state of the first STA 301 is required. The first STA 301 may transmit and receive data based on the TWT if the traffic control according to the heat state of the first STA 301 is required even when the recognized service type is a non-real-time service.

In operation 1240, the first STA 301 may not use the TWT (or a TWT negotiation) when the recognized service type is not a real-time service and the traffic control according to the heat state of the first STA 301 is not required. The first STA 301 may not perform the TWT negotiation on the second STA 302.

In operation 1250, the first STA 301 may determine TWT parameters (e.g., a TWT interval and a TWT duration) corresponding to the recognized service type (e.g., a real-time service or a non-real-time service) of the running service.

In operations 1260 to 1280, the first STA 301 may maintain the TWT parameters (e.g., the TWT interval and the TWT duration) determined in operation 1250 or may cap a value of the TWT duration of the TWT parameters (e.g., the TWT interval and the TWT duration) determined in operation 1250. For example, when the TWT-based traffic control according to the heat state of the first STA 301 is enabled, the first STA 301 may cap the value of the TWT duration of the TWT parameters (e.g., the TWT interval and the TWT duration) determined in operation 1250. The capping of the value of the TWT duration may be performed through Equation 1.

Equation 1

$$duration = wake\ interval * throttling\ rate$$

In Equation 1, the wake interval may be a value of the TWT interval determined in operation 1250. The value of the TWT interval may be maintained at a value (e.g., a value determined in operation 1250) determined to correspond to the recognized service type of the running service, and the value (e.g., an upper value) of the TWT duration may be determined (e.g., adjusted or modified) through Equation 1 to satisfy a TWT duty cycle based on the heat state of the first STA 301.

In operation 1260, the first STA 301 may determine whether a traffic ratio to be limited is greater than a first threshold. The traffic ratio to be limited may be a ratio of a currently (or actually) used throughput to a maximum throughput (e.g., an output of the heat control module 630) for the wireless communication module 510 included in the first STA 301. The traffic ratio to be limited may be used to determine whether to enable the TWT-based traffic control based on the heat state.

In operation 1263, when the traffic ratio to be limited is greater than the first threshold, the TWT-based traffic control based on the heat state may be enabled in the first STA 301, and the first STA 301 may decrease a throttling rate (e.g., an initial throttling rate). In operation 1280, the first STA 301 may cap the value of the TWT duration determined in operation 1250 based on the throttling rate less than the initial throttling rate. In this case, when the TWT-based traffic control based on the heat state may be enabled, the first STA 301 may maintain an enabled state while performing operations 1210 to 1290 repeatedly in a designated cycle until disabled.

In operation 1270, the first STA 301 may determine whether the traffic ratio to be limited is greater than a second threshold when the traffic ratio to be limited is not greater than the first threshold. In operation 1273, the first STA 301 may determine whether the TWT-based traffic control based on the heat state is enabled when the traffic ratio to be limited is greater than the second threshold. In operation 1275, when the traffic ratio to be limited is not greater than the first threshold but is greater than the second threshold, and the TWT-based traffic control based on the heat state is enabled, the first STA 301 may increase the throttling rate that has been decreased in operation 1263. The throttling rate increased in operation 1275 may still be less than the initial throttling rate. In operation 1280, the first STA 301 may cap the value of the TWT duration determined in operation 1250 based on the throttling rate greater than the throttling rate decreased in operation 1263. In operations 1275 and 1280, the first STA 301 may improve performance by increasing the throttling rate that has been decreased in operation 1263 after determining that the temperature (e.g., a temperature of the wireless communication module 510) of the first STA 301 is lowered than an initial high temperature state through the TWT-based traffic control based on the heat state of the first STA 301.

In operation 1277, when the traffic ratio to be limited is less than the first and second thresholds or the traffic ratio to be limited is 0 (e.g., when there is no output of the heat control module 630) or the TWT-based traffic control based on the heat state is not enabled, the first STA 301 may initialize the throttling rate to the initial throttling rate. In addition, the TWT-based traffic control based on the heat state that has been enabled may be disabled.

In operation 1290, the first STA 301 may perform the TWT negotiation with the second STA 302 by using the TWT parameters (e.g., the TWT parameters determined in operation 1250 or the TWT parameters capped in operation 1280).

According to an embodiment, operations 1210 to 1290 may be performed repeatedly in a designated cycle.

The first STA 301, through operations 1210 to 1290, may perform a traffic control (e.g., traffic throttling) efficiently by using a TWT setting by the TIΛΓΓ negotiation according to the heat state (e.g., the high heat state) of the first STA 301. Accordingly, the first STA 301 may lower the temperature of the wireless communication module 510.

FIG. 13 is a block diagram illustrating an electronic device in a network environment according to an embodiment. Referring to FIG. 13, the electronic device 1301 in the network environment 1300 may communicate with an electronic device 1302 via a first network 1398 (e.g., a short-range wireless communication network), or communicate with at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, a memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module (SIM) 1396, or an antenna module 1397. In an embodiment, at least one of the components (e.g., the connecting terminal 1378) may be omitted from the electronic device 1301, or one or more other components may be added to the electronic device 1301. In an embodiment, some of the components (e.g., the sensor module 1376, the camera module 1380, or the antenna module 1397) may be integrated as a single component (e.g., the display module 1360).

The processor 1320 may execute, for example, software (e.g., a program 1340) to control at least one other component (e.g., a hardware or software component) of the electronic device 1301 connected to the processor 1320 and may perform various data processing or computation. According to an embodiment, as at least a part of data processing or computation, the processor 1320 may store a command or data received from another component (e.g., the sensor module 1376 or the communication module 1390) in a volatile memory 1332, process the command or the data stored in the volatile memory 1332, and store resulting data in a non-volatile memory 1334. According to an embodiment, the processor 1320 may include the main processor 1321 (e.g., a CPU or an AP), or an auxiliary processor 1323 (e.g., a GPU, a neural processing unit (NPU), an ISP, a sensor hub processor, or a CP) that is operable independently from, or in conjunction with the main processor 1321. For example, when the electronic device 1301 includes the main processor 1321 and the auxiliary processor 1323, the auxiliary processor 1323 may be adapted to consume less power than the main processor 1321 or to be specific to a specified function. The auxiliary processor 1323 may be implemented separately from the main processor 1321 or as a part of the main processor 1321.

The auxiliary processor 1323 may control at least some of functions or states related to at least one (e.g., the display module 1360, the sensor module 1376, or the communication module 1390) of the components of the electronic device 1301 instead of the main processor 1321 while the main processor 1321 is in an inactive (e.g., sleep) state or along with the main processor 1321 while the main processor 1321 is an active state (e.g., executing an application). According to an embodiment, the auxiliary processor 1323 (e.g., an ISP or a CP) may be implemented as a portion of another component (e.g., the camera module 1380 or the communication module 1390) that is functionally related to the auxiliary processor 1323. According to an embodiment, the auxiliary processor 1323 (e.g., an NPU) may include a hardware structure specifically for artificial intelligence model processing. An artificial intelligence (AI) model may be generated by machine learning. Such learning may be performed by, for example, the electronic device 1301 in which AI is performed or performed via a separate server (e.g., the server 1308). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), and a deep Q-network or a combination of two or more thereof but is not limited thereto. The AI model may additionally or alternatively include a software structure other than the hardware structure.

The memory 1330 may store various pieces of data used by at least one component (e.g., the processor 1320 or the sensor module 1376) of the electronic device 1301. The various pieces of data may include, for example, software (e.g., the program 1340) and input data or output data for a command related thereto. The memory 1330 may include the volatile memory 1332 or the non-volatile memory 1334.

The program 1340 may be stored as software in the memory 1330, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output a sound signal to the outside of the electronic device 1301. The sound output module 1355 may include, for example, a speaker or receiver. The speaker may be used for general purposes, such as playing multimedia or playing record. The receiver may be used to receive an incoming call. According to an embodiment, the receiver may be implemented separately from the speaker or as a portion of the speaker.

The display module 1360 may visually provide information to the outside (e.g., a user) of the electronic device 1301. The display module 1360 may include, for example, a display, a hologram device, or a projector and control circuitry to control a corresponding one of the display, the hologram device, and the projector. According to an embodiment, the display module 1360 may include a touch sensor adapted to sense a touch, or a pressure sensor adapted to measure an intensity of a force incurred by the touch.

The audio module 1370 may convert a sound into an electrical signal or vice versa. According to an embodiment, the audio module 1370 may obtain the sound via the input module 1350 or output the sound via the sound output module 1355 or an external electronic device (e.g., the electronic device 1302 such as a speaker or a headphone) directly or wirelessly connected to the electronic device 1301.

The sensor module 1376 may detect an operational state (e.g., power or temperature) of the electronic device 1301 or an environmental state (e.g., a state of a user) external to the electronic device 1301 and may generate an electric signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly or wirelessly. According to an embodiment, the interface 1377 may include, for example, an HDMI, a USB interface, an SD card interface, or an audio interface.

The connecting terminal 1378 may include a connector via which the electronic device 1301 may physically connect to an external electronic device (e.g., the electronic device 1302). According to an embodiment, the connecting terminal 1378 may include, for example, an HDMI connector, a USB connector, an SD card connector, or an audio connector (e.g., a headphone connector).

The haptic module 1379 may convert an electrical signal into a mechanical stimulus (e.g., a vibration or a movement) or an electrical stimulus which may be recognized by a user via his or her tactile sensation or kinesthetic sensation. According to an embodiment, the haptic module 1379 may include, for example, a motor, a piezoelectric element, or an electric stimulator.

The camera module 1380 may capture a still image and moving images. According to an embodiment, the camera module 1380 may include one or more lenses, image sensors, ISPs, or flashes.

The power management module 1388 may manage power supplied to the electronic device 1301. According to an embodiment, the power management module 1388 may be implemented as, for example, at least a part of a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that operate independently of the processor 1320 (e.g., an application processor) and support direct (e.g., wired) communication or wireless communication. According to an embodiment, the communication module 1390 may include a wireless communication module 1392 (e.g., a cellular communication module, a short-range wireless communication module, or a global navigation satellite system (GNSS) communication module) or a wired communication module 1794 (e.g., a local area network (LAN) communication module, or a power line communication (PLC) module). A corresponding one of these communication modules may communicate with the external electronic device 1304 via the first network 1398 (e.g., a short-range communication network, such as BluetoothTM, wireless-fidelity (Wi-Fi) direct, or IR data association (IrDA)) or the second network 1399 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip) or may be implemented as multi-components (e.g., multi-chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the SIM 1396.

The wireless communication module 1392 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., a mmWave band) to achieve, e.g., a high data transmission rate. The wireless communication module 1392 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element including a conductive material or a conductive pattern formed in or on a substrate (e.g., a PCB). According to an embodiment, the antenna module 1397 may include a plurality of antennas (e.g., array antennas). In such a case, at least one antenna appropriate for a communication scheme used in a communication network, such as the first network 1398 or the second network 1399, may be selected by, for example, the communication module 1390 from the antennas. The signal or power may be transmitted or received between the communication module 1390 and the external electronic device via the at least one selected antenna. According to an embodiment, another component (e.g., a radio frequency integrated circuit (RFIC)) other than the radiating element may be additionally formed as a part of the antenna module 1397.

According to an embodiment, the antenna module 1397 may form a mmWave antenna module. According to one embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the external electronic devices 1302 or 1304 may be a device of the same type as or a different type from the electronic device 1301. According to an embodiment, all or some of operations to be executed by the electronic device 1301 may be executed at one or more external electronic devices (e.g., the external electronic devices 1302 and 1304, and the server 1308). For example, if the electronic device 1301 needs to perform a function or a service automatically, or in response to a request from a user or another device, the electronic device 1301, instead of, or in addition to, executing the function or the service, may request one or more external electronic devices to perform at least part of the function or the service. The one or more external electronic devices receiving the request may perform the at least part of the function or the service requested, or an additional function or an additional service related to the request and may transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra-low-latency services using, e.g., distributed computing or MEC. In an example, the external electronic device 1304 may include an Internet-of-things (IoT) device. The server 1308 may be an intelligent server using machine learning and/or a neural network. According to one embodiment, the external electronic device (e.g., the electronic device 1304) or the server 1308 may be included in the second network 1399. The electronic device 1301 may be applied to intelligent services (e.g., smart home, smart city, smart car, or healthcare) based on 5G communication technology or IoT-related technology.

The electronic device according to the embodiments disclosed herein may be one of various types of electronic devices. The electronic device may include, for example, a portable communication device (e.g., a smartphone), a computer device, a portable multimedia device, a portable medical device, a camera, a wearable device, or a home appliance device. According to an embodiment, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 1340) including one or more instructions that are stored in a storage medium (e.g., an internal memory 1336 or an external memory 1338) that is readable by a machine (e.g., the electronic device 1301). For example, a processor (e.g., the processor 1320) of the machine (e.g., the electronic device 1301) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)) or may be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a transmit server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to an embodiment, the integrated component may still perform one or more functions of each of the components in the same or similar manner as they are performed by a corresponding one among the components before the integration. According to embodiments, operations performed by the module, the program, or another component may be carried out sequentially, in parallel, repeatedly, or heuristically, or one or more of the operations may be executed in a different order or omitted, or one or more other operations may be added.

According to an embodiment, an electronic device (e.g., the first STA 301 of FIG. 6 or the electronic device 1301 of FIG. 13) includes at least one temperature sensor (e.g., the temperature sensor 610 of FIG. 7 or the sensor module 1376 of FIG. 13) positioned in the electronic device, at least one wireless communication module (e.g., the wireless communication module 510 of FIG. 6 or the wireless communication module 1392 of FIG. 13) configured to transmit and receive a wireless signal, at least one processor (e.g., the processor 520 of FIG. 6 or the processor 1320 of FIG. 13) connected operatively to the wireless communication module, and a memory (e.g., the memory 530 of FIG. 6 or the memory 1330 of FIG. 13) connected electrically to the processor and configured to store instructions executable by the processor, in which, when the instructions are executed by the processor, the processor may determine (e.g., operation 1010 of FIG. 10A) a target wake time (TWT) parameter differently depending on a heat state of the electronic device based on a temperature of the electronic device and may perform (e.g., operation 1020 of FIG. 10A) a TWT negotiation with an external electronic device (e.g., the second STA 302 of FIG. 3 or the electronic device 1302 or 1304 of FIG. 13) through the wireless communication module by using the TWT parameter.

According to an embodiment, the processor may determine the TWT parameter such that a TWT duty cycle operates differently depending on a heat state of the electronic device (refer to FIG. 8A).

According to an embodiment, the processor may determine the TWT parameter such that the TWT duty cycle decreases as a temperature of the electronic device increases (refer to FIG. 8A).

According to an embodiment, the processor may determine the TWT parameter to be a combination of a TWT duration and a different TWT wake interval, which satisfies the same TWT duty cycle, with respect to the TWT duty cycle based on a heat state of the electronic device (refer to FIG. 8B).

According to an embodiment, the processor may determine the combination of the TWT duration and the different TWT wake interval, which satisfies the same TWT duty cycle, according to a service type of a service that is running (refer to FIG. 8B).

According to an embodiment, the processor may determine the combination to be a combination of the TIΛΓΓ duration and a first TWT wake interval, which satisfies the same TWT duty cycle, when the service type is a real-time service, and may determine the combination to be a combination of the TWT duration and a second TWT wake interval, which satisfies the same TWT duty cycle, when the service type is a non-real-time service, in which the first TIΛΓΓ wake interval is less than the second TIΛΓΓ wake interval (refer to FIG. 8B).

According to an embodiment, the processor may set the TWT parameter differently by setting at least one value differently of a TWT wake interval mantissa field, a nominal minimum TWT duration field, and a TWT wake interval exponent field of a TWT element (e.g., the TIΛΓΓ element 410 or 430 of FIG. 4) depending on a heat state of the electronic device.

According to an embodiment, the processor may recognize (e.g., operation 1210 of FIG. 12) the service type of a running service, may determine (e.g., operation 1250 of FIG. 12) a TWT duration and a TWT interval corresponding to the recognized service type, and may cap (operation 1270 of FIG. 12) a value of the TWT duration to satisfy the TWT duty cycle based on a heat state of the electronic device.

According to an embodiment, the processor may monitor a temperature of the electronic device through the temperature sensor and determine a heat state of the electronic device.

According to an embodiment, the electronic device may further include an auxiliary processor (e.g., the auxiliary processor 710 of FIG. 7 or the auxiliary processor 1323 of FIG. 13) configured to monitor a temperature of the electronic device through the temperature sensor and determine a heat state of the electronic device.

According to an embodiment an operating method of an electronic device (e.g., the first STA 301 of FIG. 6 or the electronic device 1301 of FIG. 13) includes an operation (e.g., operation 1030 of FIG. 10B) of monitoring a temperature of the electronic device, an operation (e.g., operation 1040 of FIG. 10B) of determining a heat state of the electronic device based on the monitored temperature, an operation (e.g., operation 1050 of FIG. 10B) of determining a target wake time (TWT) parameter differently depending on a heat state of the electronic device, and an operation (e.g., operation 1060 of FIG. 10B) of performing a TWT negotiation with an external electronic device (e.g., the second STA 302 of FIG. 3 or the electronic device 1302 or 1304 of FIG. 13) by using the TWT parameter.

According to an embodiment, the operation of determining may include an operation of determining the TWT parameter such that a TWT duty cycle operates differently depending on a heat state of the electronic device (refer to FIG. 8A).

According to an embodiment, the operation of determining the TWT parameter may include an operation of determining the TWT parameter such that the TIΛΓΓ duty cycle decreases as a temperature of the electronic device increases (refer to FIG. 8A).

According to an embodiment, the operation of determining the TWT parameter may include an operation of determining the TWT parameter to be a combination of a TWT duration and a different TWT wake interval, which satisfies the same TWT duty cycle, with respect to the TIΛΓΓ duty cycle based on a heat state of the electronic device (refer to FIG. 8B).

According to an embodiment, the operation of determining the TWT parameter to be the combination may include an operation of determining the combination of the TIΛΓΓ duration and the different TIΛΓΓ wake interval satisfying the same TWT duty cycle according to a service type of a service that is running (refer to FIG. 8B).

According to an embodiment, the operation of determining the combination of the TIΛΓΓ duration and the different TIΛΓΓ wake interval satisfying the same TWT duty cycle according to a service type of a service that is running may include an operation of determining the combination to be a combination of the TIΛΓΓ duration and a first TWT interval, which satisfies the same TWT duty cycle, when the service type is a real-time service, and an operation of determining the combination to be a combination of the TIΛΓΓ duration and a second TWT interval, which satisfies the same TWT duty cycle, when the service type is a non-real-time service, in which the first TWT interval is less than the second TWT interval (refer to FIG. 8B).

According to an embodiment, the operation of determining may include an operation of setting the TWT parameter differently by setting at least one value differently of a TWT wake interval mantissa field, a nominal minimum TWT duration field, and a TWT wake interval exponent field of a TWT element (e.g., the TIΛΓΓ element 410 or 430 of FIG. 4) depending on a heat state of the electronic device.

According to an embodiment, the operation of determining may include an operation of determining (e.g., operation 1250 of FIG. 12) a TWT duration and a TWT interval corresponding to a recognized service type of a service that is running and an operation of capping (operation 1270 of FIG. 12) a value of the TWT duration to satisfy the TWT duty cycle based on a heat state of the electronic device.

According to an embodiment, the operating method may further include an operation (e.g., operation 1210 of FIG. 12) of recognizing the service type of the service that is running.

According to an embodiment, the operating method may further include an operation (e.g., operation 950 of FIG. 9) of performing a TWT negotiation again or tearing down a TWT when the heat state is dissipated.

**Claims**

1. An electronic device 301 comprising:

   at least one temperature sensor 610 positioned in the electronic device;
   at least one wireless communication module 510 configured to transmit and receive a wireless signal;
   at least one processor 520 connected operatively to the wireless communication module; and a memory 530 connected electrically to the processor and configured to store instructions executable by the processor, wherein, when the instructions are executed by the processor, the processor is configured to
   determine a target wake time (TWT) parameter differently depending on a heat state of the electronic device based on a temperature of the electronic device, and
   perform a TWT negotiation with an external electronic device through the wireless communication module by using the TWT parameter.

2. The electronic device of claim 1, wherein

   the processor is further configured to
   determine the TWT parameter such that a TWT duty cycle operates differently depending on a heat state of the electronic device.

3. The electronic device of any one of claims 1 and 2, wherein

   the processor is further configured to
   determine the TWT parameter such that the TWT duty cycle decreases as a temperature of the electronic device increases.

4. The electronic device of any one of claims 1 to 3, wherein

   the processor is further configured to
   determine the TWT parameter to be a combination of a TWT duration and a different TWT interval, which satisfies the same TWT duty cycle, with respect to the TWT duty cycle based on a heat state of the electronic device.

5. The electronic device of any one of claims 1 to 4, wherein

   the processor is further configured to
   determine the combination of the TWT duration and the different TWT interval, which satisfies the same TWT duty cycle, according to a service type of a service that is running.

6. The electronic device of any one of claims 1 to 5, wherein

   the processor is further configured to
   determine the combination to be a combination of the TWT duration and a first TWT interval, which satisfies the same TWT duty cycle, when the service type is a real-time service, and
   determine the combination to be a combination of the TWT duration and a second TWT interval, which satisfies the same TWT duty cycle, when the service type is a non-real-time service, wherein
   the first TWT interval is less than the second TWT interval.

7. The electronic device of any one of claims 1 to 6, wherein

   the processor is further configured to
   set the TWT parameter differently by setting at least one value differently of a TWT wake interval mantissa field, a nominal minimum TWT duration field, and a TWT wake interval exponent field of a TWT element depending on a heat state of the electronic device.

8. The electronic device of any one of claims 1 to 7, wherein

   the processor is further configured to recognize the service type of a running service,

determine a TWT duration and a TWT interval corresponding to the recognized service type, and
cap a value of the TWT duration to satisfy the TWT duty cycle based on a heat state of the electronic device.

9. The electronic device of any one of claims 1 to 8, wherein

the processor is further configured to
monitor a temperature of the electronic device through the temperature sensor and determine a heat state of the electronic device.

10. The electronic device of any one of claims 1 to 9, further comprising:
an auxiliary processor configured to monitor a temperature of the electronic device through the temperature sensor and determine a heat state of the electronic device.

11. An operating method of an electronic device 301, the operating method comprising:

operation 1030 of monitoring a temperature of the electronic device;
operation 1040 of determining a heat state of the electronic device based on the monitored temperature;
operation 1050 of determining a target wake time (TWT) parameter differently depending on a heat state of the electronic device; and
operation 1060 of performing a TWT negotiation with an external electronic device by using the TWT parameter.

12. The operating method of claim 11, wherein
the determining comprises:
determining the TWT parameter such that a TWT duty cycle operates differently depending on a heat state of the electronic device.

13. The operating method of any one of claims 11 and 12, wherein
the determining the TWT parameter comprises:
determining the TWT parameter such that the TWT duty cycle decreases as a temperature of the electronic device increases.

14. The operating method of any one of claims 11 to 13, wherein
the determining the TWT parameter comprises:
determining the TWT parameter to be a combination of a TWT duration and a different TWT interval, which satisfies the same TWT duty cycle, with respect to the TWT duty cycle based on a heat state of the electronic device.

15. The operating method of any one of claims 11 to 14, wherein
the determining the TWT parameter to be the combination comprises:
determining the combination of the TWT duration and the different TWT interval satisfying the same TWT duty cycle according to a service type of a service that is running.

FIG. 1

802.11 LAN

FIG. 2

FIG. 3

_410_

| Request Type | Target Wake Time | TWT Group Assignment | Nominal Minimum TWT Wake Duration | TWT Wake Interval Mantissa | TWT Channel | NDP Paging (optional) |
|---|---|---|---|---|---|---|
| Octets: | 0 or 8 | 0, 3 or 9 | 1 | 2 | 1 | 0 or 4 |

| | B0 | B1 B3 | B4 | B5 | B6 | B7 B9 | B10 B14 | 15 |
|---|---|---|---|---|---|---|---|---|
| | TWT Request | TWT Setup Command | Reserved Trigger | Implicit | Flow Type | TWT Flow Identifier | TWT Wake Interval Exponent | TWT Protection |
| Bits: | 1 | 3 | 1 | 1 | 1 | 3 | 5 | 1 |

_430_

| Request Type | Target Wake Time | Nominal Minimum TWT Wake Duration | TWT Wake Interval Mantissa | Broadcast TWT Info |
|---|---|---|---|---|
| Octets: | 2 | 2 | 1 | 2 | 2 |

| | B0 | B1 B3 | B4 | B5 | B6 | B7 B9 | B10 B14 | 15 |
|---|---|---|---|---|---|---|---|---|
| | TWT Request | TWT Setup Command | Trigger | Last Broadcast Parameter Set | Flow Type | Broadcast TWT Recommendation | TWT Wake Interval Exponent | Reserved |
| Bits: | 1 | 3 | 1 | 1 | 1 | 3 | 5 | 1 |

## FIG. 4

301

Processor 520

Service type
recognition module
540

TWT control module
550

Memory
530

Communication module
510

FIG. 5

301

Processor 520

Service type
recognition
module 540

Memory
530

Temperature
sensor
610

Heat control
module
630

TWT control
module
550

Communication module
510

FIG. 6

FIG. 7

Heat range 3
815

Heat range 2
813

Heat range 1
811

Traffic control
mode 3
825

Traffic control
mode 2
823

Traffic control
mode 1
821

Higher
temperature

Lower duty
cycle

FIG. 8A

TWT duration

TWT SP

TWT SP

Non-real-time
service
(e.g., web browsing)

TWT interval

TWT
duration

TWT
SP

TWT
SP

TWT
SP

Real-time
service
(e.g., VoIP)

TWT interval

FIG. 8B

EP 4 383 807 A1

```
┌─────────────────┐                              ┌─────────────────┐
│  First STA 301  │                              │ Second STA 302  │
└─────────────────┘                              └─────────────────┘
         │                                                │
         │        Transmit and receive data 910           │
         │◄──────────────────────────────────────────────►│
Normal State                                              │
         │                                                │
         │          Perform TWT negotiation 930           │
         │◄──────────────────────────────────────────────►│
         │                                                │
Overheat State                                            │
         │                                                │
         │  Perform TWT renegotiation or tear down TWT 950│
         │◄──────────────────────────────────────────────►│
Normal State                                              │
         │                                                │
```

# FIG. 9

Start

1010
Determine TWT parameters differently depending on heat state of STA

1020
Perform TWT negotiation by using TWT parameters

End

FIG. 10A

Start

1030
Monitor temperature

1040
Determine heat state

1050
Determine TWT parameters differently depending on heat state of STA

1060
Perform TWT negotiation by using TWT parameters

End

FIG. 10B

시작

Recognize service type of running service ⌐ 1110

Is it real-time service? ⌐ 1120

No → Tear down TWT ⌐ 1130

Yes

Determine TWT duration and TWT interval ⌐ 1140

Perform TWT negotiation ⌐ 1150

## FIG. 11

Start

1210
Recognize service type of running service

1220
Determine whether traffic control is required

1230
Is real-time service or traffic control required?

No →
1240
Tear down TWT

Yes ↓
1250
Determine TWT duration and TWT interval

1260
Is traffic ratio to be limited greater than first threshold?

Yes →
1263
• Enable traffic control (or throttling control)
• Decrease throttling rate

No ↓
1270
Is traffic ratio to be limited greater than second threshold?

No →

Yes ↓
1273
Is traffic control enabled?

No →
1277
• Initialize throttling rate
• Disable traffic control

Yes ↓
1275
Increase throttling rate

1280
Cap TWT duration

1290
Perform TWT negotiation

FIG. 12

EP 4 383 807 A1

```
                                    ┌─ 1300
┌─────────────────────────────────────────┐
│            Electronic device 1301         │
│ ┌──────────┐ ┌──────────┐ ┌─────────────┐ │      ┌──────────────────────────────┐
│ │Input     │ │          │ │ Memory 1330 │ │      │         Program 1340         │
│ │module    │ │          │ │ ┌─────────┐ │ │      │ ┌──────────────────────────┐ │
│ │1350      │ │          │ │ │Volatile │ │ │      │ │                          │ │
│ └──────────┘ │Display   │ │ │memory   │ │ │      │ │    Application 1346       │ │
│              │module    │ │ │1332     │ │ │      │ │                          │ │
│ ┌──────────┐ │1360      │ │ └─────────┘ │ │      │ └──────────────────────────┘ │
│ │Sound     │ │          │ │┌───────────┐│ │      │ ┌──────────────────────────┐ │
│ │output    │ │          │ ││Non-volatile││ │     │ │                          │ │
│ │module    │ │          │ ││memory 1334││ │      │ │    Middleware 1344        │ │
│ │1355      │ │          │ ││┌─────────┐││ │      │ │                          │ │
│ └──────────┘ └──────────┘ │││Internal ││││      │ └──────────────────────────┘ │
│                           │││memory   ││││      │ ┌──────────────────────────┐ │
│                           │││1336     ││││      │ │                          │ │
│                           ││└─────────┘││      │ │       OS 1342            │ │
│                           ││┌─────────┐││      │ │                          │ │
│                           │││External ││││      │ └──────────────────────────┘ │
│                           │││memory   ││││      └──────────────────────────────┘
│                           │││1338     ││││
```

Memory 1330
Volatile memory 1332
Non-volatile memory 1334
Internal memory 1336
External memory 1338

Program 1340
Application 1346
Middleware 1344
OS 1342

Electronic device 1301
Input module 1350
Sound output module 1355
Display module 1360

Battery 1389
Power management module 1388

Processor 1320
Main processor 1321
Auxiliary processor 1323

Communication module 1390
Wireless communication module 1392
Wired communication module 1394

SIM 1396
Antenna module 1397

Audio module 1370
Haptic module 1379
Sensor module 1376
Camera module 1380
Interface 1377
Connecting terminal 1378

Second network 1399
First network 1398
Electronic device 1304
Electronic device 1302
Server 1308

FIG. 13

| **INTERNATIONAL SEARCH REPORT** | International application No. |
|---|---|
| | **PCT/KR2022/010890** |

**A. CLASSIFICATION OF SUBJECT MATTER**

**H04W 28/18**(2009.01)i; **H04W 28/02**(2009.01)i; **H04W 88/02**(2009.01)i

According to International Patent Classification (IPC) or to both national classification and IPC

**B. FIELDS SEARCHED**

Minimum documentation searched (classification system followed by classification symbols)

H04W 28/18(2009.01); G08C 17/00(2006.01); H04L 29/08(2006.01); H04L 5/00(2006.01); H04W 28/02(2009.01); H04W 52/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 온도 센서(temperature sensor), TWT, 파라미터(parameter), 협상(negotiation), 듀티 사이클(duty cycle)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2017-0109556 A (QUALCOMM INCORPORATED) 29 September 2017 (2017-09-29)<br>See paragraphs [0010]-[0032], [0105], [0162] and [0174] and figure 1. | 1-15 |
| Y | US 2019-0364110 A1 (CISCO TECHNOLOGY, INC.) 28 November 2019 (2019-11-28)<br>See paragraphs [0037]-[0045] and figure 3. | 1-15 |
| Y | US 2010-0002615 A1 (GUPTA, Maruti) 07 January 2010 (2010-01-07)<br>See paragraphs [0011]-[0015], [0026], [0031]-[0032] and [0041] and figures 3-4. | 2-6,8,12-15 |
| A | KR 10-2021-0018990 A (INTEL CORPORATION) 19 February 2021 (2021-02-19)<br>See paragraphs [0171]-[0279] and figures 4-11. | 1-15 |
| A | US 2019-0246354 A1 (HUANG, Po-Kai et al.) 08 August 2019 (2019-08-08)<br>See paragraphs [0101]-[0165] and figures 8-11. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 October 2022** | **26 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

**INTERNATIONAL SEARCH REPORT**
Information on patent family members

</div>

International application No.

**PCT/KR2022/010890**

| Patent document cited in search report | | | Publication date (day/month/year) | Patent family member(s) | | | Publication date (day/month/year) |
|---|---|---|---|---|---|---|---|
| KR | 10-2017-0109556 | A | 29 September 2017 | AU | 2016-211405 | A1 | 06 July 2017 |
| | | | | AU | 2016-211411 | A1 | 06 July 2017 |
| | | | | AU | 2016-211419 | A1 | 13 July 2017 |
| | | | | BR | 112017016228 | A2 | 27 March 2018 |
| | | | | BR | 112017016241 | A2 | 27 March 2018 |
| | | | | BR | 112017016248 | A2 | 27 March 2018 |
| | | | | CN | 107211371 | A | 26 September 2017 |
| | | | | CN | 107211371 | B | 12 May 2020 |
| | | | | CN | 107211372 | A | 26 September 2017 |
| | | | | CN | 107211372 | B | 30 June 2020 |
| | | | | CN | 107211373 | A | 26 September 2017 |
| | | | | CN | 107211373 | B | 30 June 2020 |
| | | | | EP | 3251422 | A1 | 06 December 2017 |
| | | | | EP | 3251422 | B1 | 03 October 2018 |
| | | | | EP | 3251423 | A1 | 06 December 2017 |
| | | | | EP | 3251423 | B1 | 27 February 2019 |
| | | | | EP | 3251424 | A1 | 06 December 2017 |
| | | | | EP | 3251424 | B1 | 17 July 2019 |
| | | | | JP | 2018-505606 | A | 22 February 2018 |
| | | | | JP | 2018-505607 | A | 22 February 2018 |
| | | | | JP | 2018-505608 | A | 22 February 2018 |
| | | | | JP | 6607950 | B2 | 20 November 2019 |
| | | | | JP | 6615208 | B2 | 04 December 2019 |
| | | | | JP | 6804456 | B2 | 23 December 2020 |
| | | | | KR | 10-2017-0108026 | A | 26 September 2017 |
| | | | | KR | 10-2017-0109555 | A | 29 September 2017 |
| | | | | KR | 10-2029330 | B1 | 07 October 2019 |
| | | | | KR | 10-2228602 | B1 | 15 March 2021 |
| | | | | KR | 10-2362757 | B1 | 11 February 2022 |
| | | | | TW | 201631946 | A | 01 September 2016 |
| | | | | TW | 201631947 | A | 01 September 2016 |
| | | | | TW | 201633834 | A | 16 September 2016 |
| | | | | US | 10194391 | B2 | 29 January 2019 |
| | | | | US | 10499333 | B2 | 03 December 2019 |
| | | | | US | 10827425 | B2 | 03 November 2020 |
| | | | | US | 2016-0219510 | A1 | 28 July 2016 |
| | | | | US | 2016-0219512 | A1 | 28 July 2016 |
| | | | | US | 2016-0219522 | A1 | 28 July 2016 |
| | | | | US | 2017-0311258 | A1 | 26 October 2017 |
| | | | | US | 9713087 | B2 | 18 July 2017 |
| | | | | WO | 2016-123389 | A1 | 04 August 2016 |
| | | | | WO | 2016-123395 | A1 | 04 August 2016 |
| | | | | WO | 2016-123403 | A1 | 04 August 2016 |
| US | 2019-0364110 | A1 | 28 November 2019 | US | 10609147 | B2 | 31 March 2020 |
| US | 2010-0002615 | A1 | 07 January 2010 | CN | 101631378 | A | 20 January 2010 |
| | | | | CN | 101631378 | B | 16 April 2014 |
| | | | | CN | 101677431 | A | 24 March 2010 |
| | | | | EP | 2144465 | A2 | 13 January 2010 |
| | | | | EP | 2144465 | A3 | 01 August 2012 |
| | | | | EP | 2327194 | A2 | 01 June 2011 |

Form PCT/ISA/210 (patent family annex) (July 2022)

**INTERNATIONAL SEARCH REPORT**
Information on patent family members

International application No.

**PCT/KR2022/010890**

| Patent document cited in search report | | | Publication date (day/month/year) | Patent family member(s) | | | Publication date (day/month/year) |
|---|---|---|---|---|---|---|---|
| | | | | EP | 2327194 | A4 | 01 July 2015 |
| | | | | JP | 2011-527555 | A | 27 October 2011 |
| | | | | KR | 10-1220553 | B1 | 10 January 2013 |
| | | | | KR | 10-2011-0048516 | A | 11 May 2011 |
| | | | | TW | 201016061 | A | 16 April 2010 |
| | | | | TW | I411339 | B | 01 October 2013 |
| | | | | US | 2010-0002681 | A1 | 07 January 2010 |
| | | | | US | 2010-0004016 | A1 | 07 January 2010 |
| | | | | US | 2010-0005354 | A1 | 07 January 2010 |
| | | | | US | 2010-0005355 | A1 | 07 January 2010 |
| | | | | US | 2010-0008325 | A1 | 14 January 2010 |
| | | | | US | 2010-0020733 | A1 | 28 January 2010 |
| | | | | US | 2010-0162069 | A1 | 24 June 2010 |
| | | | | US | 2015-0149849 | A1 | 28 May 2015 |
| | | | | US | 8233418 | B2 | 31 July 2012 |
| | | | | US | 8261151 | B2 | 04 September 2012 |
| | | | | US | 8359512 | B2 | 22 January 2013 |
| | | | | US | 8737383 | B2 | 27 May 2014 |
| | | | | US | 8817742 | B2 | 26 August 2014 |
| | | | | US | 8959409 | B2 | 17 February 2015 |
| | | | | US | 9344228 | B2 | 17 May 2016 |
| | | | | WO | 2010-005849 | A2 | 14 January 2010 |
| | | | | WO | 2010-005849 | A3 | 25 March 2010 |
| | | | | WO | 2010-005852 | A2 | 14 January 2010 |
| | | | | WO | 2010-005852 | A3 | 15 April 2010 |
| KR | 10-2021-0018990 | A | 19 February 2021 | US | 2021-022154 | A1 | 21 January 2021 |
| | | | | WO | 2020-013874 | A1 | 16 January 2020 |
| US | 2019-0246354 | A1 | 08 August 2019 | US | 10716066 | B2 | 14 July 2020 |

Form PCT/ISA/210 (patent family annex) (July 2022)